# EUROPÄISCHE PATENTSCHRIFT

(11) **EP 1 668 494 B1**
(45) Veröffentlichungstag und Bekanntmachung des Hinweises auf die Patenterteilung: **31.12.2008**
(21) Anmeldenummer: 03818925.4
(22) Anmeldetag: 30.09.2003
(51) Int. Cl.: G06F 9/44

(54) **VERFAHREN UND SYSTEM ZUR SPRACHKONFIGURIERUNG EINES COMPUTERPROGRAMMS**
METHOD AND SYSTEM FOR CONFIGURING THE LANGUAGE OF A COMPUTER PROGRAMME
PROCEDE ET SYSTEME DE CONFIGURATION VOCALE D'UN PROGRAMME INFORMATIQUE

(43) Veröffentlichungstag der Anmeldung: 14.06.2006
(73) Patentinhaber: SIEMENS AKTIENGESELLSCHAFT, 80333 München (DE)
(72) Erfinder: SEIDENBECHER, Thomas, 91056 Erlangen (DE)
(86) Internationale Anmeldenummer: PCT/DE2003/003310
(87) Internationale Veröffentlichungsnummer: WO 2005/043386

(56) Entgegenhaltungen:
- EP-A- 1 315 086
- US-A1- 2002 111 933
- US-B1- 6 205 418
- SUN MICROSYSTEMS: "I18N Resource Manager" ONLINE, 17. April 1998 (1998-04-17), XP002164859

## Beschreibung

Die Erfindung betrifft ein Verfahren nach dem Oberbegriff des Patentanspruchs 1 sowie ein Computersystem nach dem Oberbegriff des Patentanspruchs 4.

Soll ein Computerprogramm in verschiedenen Ländern oder Regionen mit jeweils unterschiedlicher Sprache eingesetzt werden, so ist es häufig wünschenswert, die graphische Anzeige des Computerprogramms und insbesondere die Dialoge der Benutzerschnittstelle des Programms auf die jeweilige Sprache des Landes bzw. der Region anzupassen. Dabei wird die Anzeige von einer z. B. als Standard eingestellten Ausgangssprache - beispielsweise deutsch - in eine bevorzugte Auswahlsprache - beispielsweise englisch - geändert.

Dieser nach dem Stand der Technik üblicherweise als "Lokalisierung" bezeichnete Vorgang der Sprachanpassung eines Computerprogramms in verschiedene andere Sprachen wird nach dem Stand der Technik dadurch unterstützt, dass das Computerprogramm beim Entwurf bereits auf eine einfache Lokalisierbarkeit hin ausgelegt wird. Diese Form des Programmentwurfs bezeichnet man nach dem Stand der Technik als "Internationalisierung".

Bestehende Ansätze zur Internationalisierung sehen einerseits vor, im Quelltext des Computerprogramms anstelle der zu verwendenden Texte für die Dialoge des Computerprogramms, wie etwa Menüs, Schaltflächen oder Texte für Kurzhilfen, Platzhalterausdrücke vorzusehen. Diese Platzhalterausdrücke werden dann in allen Teilen des Computerprogramms anstelle der entsprechenden Nachrichtentexte, also derjenigen Teile, die dem Nutzer des Computerprogramms zur Anzeige gebracht werden, verwendet. In bestimmten Teilen des Quelltextes des Computerprogramms, beispielsweise in so genannten Header-Dateien, werden dann Compilerdefinitionen erstellt, beispielsweise so genannte #define-Ausdrücke, in welchen den Platzhaltern die gewünschten Nachrichtentexte einer bestimmten Landessprache zugewiesen werden. Während des Kompilierens des Computerprogramm-Quelltextes ersetzt dann der Compiler im Quelltext zunächst jeden auftretenden Platzhalter mit dem Nachrichtentext entsprechend der Compiler-Definition aus dem entsprechenden Teil des Computer-Quelltextes.

Auf diese Weise wird erreicht, dass für eine Lokalisierung in eine bestimmte Landessprache lediglich die entsprechenden Compiler-Definitionen ersetzt werden müssen, welche dann während des Kompilierungsprozesses durch den Compiler im Quelltext ersetzt werden.

Dieses Verfahren weist jedoch den praktischen Nachteil auf, dass für die Lokalisierung des Computerprogramms dasselbe in seinem Quelltext vorliegen muss. Dies ist gerade dann nachteilig, wenn Lokalisierungsanpassungen beispielsweise in der Niederlassung des jeweiligen Ziel-Landes oder etwa spezifische Anpassungen für einen Kunden vor Ort erfolgen sollen. In diesen Fällen ist es häufig nicht wünschenswert, den gesamten Quelltext des Programms weiterzugeben. Ferner wird bei diesem Verfahren eine entsprechende Entwicklungsumgebung für das Kompilieren des Programms benötigt, was zusätzlichen Aufwand an Technik, Zeit und Kosten verursacht.

Andererseits ist nach dem Stand der Technik bekannt, ein Programm modular vorzukompilieren, derart, dass alle sprachspezifischen Teile eines Programms in gesonderten Teilen des binären Computerprogramms, so genannten Dynamic Link Libraries (DLLs) angeordnet sind. Hierbei sind zwischen den einzelnen DLLs Einsprungadressen vorgesehen, so dass die entsprechenden Teile des binären - also bereits kompilierten und ausführbaren - Computerprogramms in wohldefinierter Weise zusammengefügt werden. Es kann somit ein erster Teil des binären Computerprogramms an einer bestimmten Einsprungadresse einer länderspezifischen DLL den länderspezifischen Nachrichtentext aufrufen.

Zwar muss bei diesem Verfahren nicht mehr der gesamte Quelltext beim Lokalisieren des Computerprogramms vorliegen, aber es müssen dennoch die länderspezifischen Teile des Quelltexts offen gelegt werden, bei denen die Sprachanpassung erfolgen soll, und auch hier muss für die Lokalisierung eine entsprechende Entwicklungsumgebung samt Compiler vorhanden sein, um aus den lokalisierten Quelltextteilen eine DLL zu erstellen.

Dies ist insbesondere für das nachträgliche Vornehmen kleiner Veränderungen bei einem Kunden oder durch den Kunden selbst ein Hindernis.

Aus der US 6,205,418 B1 ist ein Verfahren zur Sprachkonfigurierung eins Computersystems bekannt, das zur Laufzeit eines von dem Computersystem ausgeführten Computerprogramms durchgeführt wird, bei dem Identifizierungsausdrücke durch in einer Sprachdatenbank gespeicherte Nachrichtenzeichenketten ersetzt werden.

Aufgabe der vorliegenden Erfindung ist es, ein Verfahren und ein System zur Sprachkonfigurierung eines Computerprogramms anzugeben, welches die vorstehend diskutierten Nachteile vermeidet und insbesondere mit geringem Aufwand eine nachträgliche Sprachanpassung eines in binärer Form vorliegenden, ausführbaren Computerprogramms ermöglicht.

Diese Aufgabe wird durch ein Verfahren nach dem Patentanspruch 1 und ein Computersystem nach dem Patentanspruch 7 gelöst.

Dadurch, dass das Auffinden von zu im Computerprogramm enthaltenen Platzhalterzeichenketten gehörenden Identifizierungsausdrücken in einem Textspeicher und das Ersetzen der Platzhalterzeichenketten des Computerprogramms mit den im Textspeicher zugewiesenen Nachrichtenzeichenketten zur Laufzeit des ausführbaren binären Computerprogramms durchgeführt wird, wird erreicht, dass zur Sprachkonfigurierung bzw. Lokalisierung, d.h., der Anpassung des Wortlauts der Nachrichtenzeichenketten, keine manuellen oder automatisierten Eingriffe in den Quelltext des Computerprogramms erforderlich werden. Auf diese Weise kann eine Lokalisierung bzw. nachträgliche Anpassung ohne Neukompilieren und somit die für das Neukompilieren erforderliche Entwicklungsumgebung erfolgen.

Es wird ferner so ermöglicht, sprachliche Anpassungen auch während des kontinuierlichen Einsatzes des Computerprogramms vorzunehmen, d.h., ohne das laufende Computerprogramm anzuhalten oder zu beenden.

Dadurch, dass besagtes Ersetzen der Platzhalterzeichenketten des Computerprogramms mit im Textspeicher zugewiesenen Nachrichtenzeichenketten durch Zuweisung der Nachrichtenzeichenketten an Speichervariablen des laufenden Computerprogramms erfolgt, wird es ermöglicht, das binäre Computerprogramm bei einer Lokalisierungsanpassung unverändert zu lassen, während sich bei den besagten Ersetzungsvorgängen lediglich dynamische Inhalte des dem Computerprogramm zugewiesenen Speichers verändern. Dies findet insbesondere im Gegensatz zur Hinterlegung von statischen Zeichenketten-Konstanten an festgelegten Einsprungadressen statt, wie sie bei Verwendung von Dynamic Link Libraries (DLLs) Verwendung finden.

Durch das Zusammenwirken dieser Merkmale wird erreicht, dass das Computerprogramm in seinem ausführbaren Binärcode nicht verändert werden muss, um eine Sprachanpassung durchzuführen.

Diese Vorteile werden in entsprechender Weise im erfindungsgemäßen Computersystem dadurch erreicht, dass das Computerprogramm in ausführbarem Binärcode vorliegt und Mittel zum Auffinden von zu im Computerprogramm enthaltenen Platzhalterzeichenketten gehörenden Identifizierungsausdrücken in einem Textspeicher und zum Ersetzen der Platzhalterzeichenketten des Computerprogramms mit den in dem Textspeicher zugewiesenen Nachrichtenzeichenketten im Computerprogramm enthalten sind.

Es wird hierdurch ferner vorteilhafterweise erreicht, dass es vermieden wird, zusätzlich zum Computerprogramm ein spezielles Software-Werkzeug zum Erstellen und Kompilieren der die Sprachanzeige betreffenden Stellen im Quelltext des Computerprogramms in das System einzuführen und somit einen Komplexitätszuwachs zu bewirken. Auf diese Weise wird ferner die Einbeziehung des für das Auffinden im Textspeicher und Ersetzen im Speicher des Computerprogramms verwendeten Programmcodes in das zu lokalisierende Computerprogramm entscheidend erleichtert.

Dadurch, dass der Textspeicher so ausgewählt wird, dass die Identifizierungsausdrücke alphanumerische Namensbezeichner und alphanumerische Feldbezeichner enthalten, und dass je einem Feldbezeichner eine Nachrichtenzeichenkette zugewiesen ist, wird es ermöglicht, mehrere Wertepaare, jeweils bestehend aus alphanumerischem Feldbezeichner und Nachrichtenzeichenkette, zu einer übergeordneten Datenstruktur, welche mit dem Namensbezeichner gekennzeichnet ist, zusammenzufassen und über den besagten alphanumerischen Namensbezeichner gebündelt zu adressieren. Auf diese Weise können gebündelt alle die zu einem Dialog zugehörigen Nachrichtenzeichenketten, etwa für Schaltflächen eines Dialoges und einzublendende Kontext-Nachrichtentexte, über die Verwendung des gemeinsamen Namensbezeichners in einem einzigen, gemeinsamen Verweis durch eine geeignete Platzhalterzeichenkette im Computerprogramm adressiert werden.

Da außerdem das Auffinden eines Identifizierungsausdrucks im Textspeicher zu einer im Computerprogramm enthaltenen Platzhalterzeichenkette durch Auswertung eines aus mindestens einem der besagten Namensbezeichner gebildeten Pfades der Platzhalterzeichenkette erfolgt, wird es ermöglicht, in logisch konsistenter Weise einen spezifischen Namensbezeichner zu adressieren, wenn mehrere Namensbezeichner ineinander verschachtelt sind. Durch derartig hierarchisch verschachtelte Namensbezeichner ist es beispielsweise möglich, lokale Gültigkeitsbereiche für Namensbezeichner herzustellen, wodurch die Erweiterbarkeit des Systems verbessert und die Anfälligkeit für Fehler bei der Lokalisierung vermindert werden.

Dabei werden entsprechend der Reihenfolge der Namensbezeichner des Pfades die verschachtelten Namensbezeichner des Textspeichers adressiert, bis keine weiteren Namensbezeichner entlang des Pfades bestehen und die Wertepaare aus Feldbezeichner und Nachrichtenzeichenkette eindeutig bestimmt und ausgelesen werden können.

Die Verwendung eines Pfades aus alphanumerischen Namensbezeichnern als Platzhalterzeichenkette im Computerprogramm ist deswegen besonders vorteilhaft, weil eine solche Zeichenkette der Art der Datenstruktur nach zu der ersetzenden Nachrichtenzeichenkette gleichartig ist und deswegen beim Ersetzungsvorgang leicht verarbeitet werden kann.

Da ferner die zu ersetzenden Platzhalterausdrücke jeweils aus einer Speichervariable einer Dialogstruktur des Computerprogramms ausgelesen werden, kann in besonders einfacher Weise beim Programmentwurf und der -implementierung bestehende Software zur Erstellung von Dialogen der Benutzerschnittstelle eines Computerprogramms herangezogen werden, ohne dass in diese bestehende Software ändernd eingegriffen werden muss. Es kann auf diese Weise der Dialog, etwa unter Zuhilfenahme eines grafischen Dialog-Editors, in herkömmlicher Weise erstellt werden und anstelle des üblicherweise einzugebenden Dialogtextes die Platzhalterzeichenkette eingegeben werden.

Weil außerdem die Platzhalterzeichenkette, die vorteilhafterweise in einer Speichervariable einer Dialogstruktur des Computerprogramms gespeichert sein kann, mit einem charakteristischen Präfix, vorzugsweise aus alphanumerischen Symbolen, beginnt, können solche in einer Dialogstruktur gespeicherten Zeichenketten, die Platzhalterzeichenketten sind, in einfacher Weise von nicht zu lokalisierenden Zeichenketten in Dialogen der Benutzerschnittstelle des Computerprogramms unterschieden werden.

Vorteilhafte Weiterbildungen der Erfindung sind in den auf Anspruch 1 rückbezogenen Unteransprüchen möglich und werden im Folgenden kurz erläutert:

Wird das Verfahren dahingehend weitergebildet, dass für den Aufbau des Textspeichers das XML-Format ausgewählt wird und das Auffinden der Identifizierungsausdrücke durch Interpretieren von XML-Tags erfolgt, so wird ein gängiges und plattformübergreifendes Datenformat gewählt, welches von einer Vielzahl von Editoren bearbeitet werden kann und welches eine Syntax aufweist, die mit gängigen Methoden weitgehend auf Fehler und Inkonsistenzen leicht überprüft werden kann.

Die hier und in der Gesamtheit der vorliegenden Beschreibung in Bezug genommene Definition für die XML-Sprache und diesbezügliche Begrifflichkeiten sind offenbart in Bray et. al.: "Extensible Markup Language (XML) 1.0 (Second Edition), W3C Recommendation, 6. Oktober 2000. Mit den XML-Tags wird eine für das XML-Format geeignete Form für die alphanumerischen Identifizierungsausdrücke gefunden.

Wird der XML-Textspeicher, beispielsweise eine XML-Datei, so ausgewählt, dass dieser in Form einer XML-Tabelle strukturiert ist, so wird eine XML-geeignete Form angegeben, in der als verschachtelte Namensbezeichner die eine XML-Tabelle bildenden entsprechenden XML-Tags zur Speicherung ausgewählt wurden.

Das Computersystem kann in vorteilhafter Weise entsprechend der vorgenannten Weiterbildungen des Verfahrens ausgeführt werden.

Die Merkmale aller Ansprüche können im Rahmen der Erfindung frei in vorteilhafter Weise kombiniert werden.

Entsprechend der vorteilhaften Ausführungsform des Textspeichers in XML-Format können auch im vorteilhaft weitergebildeten Computersystem zur Sprachkonfigurierung die verwendeten Namensbezeichner als XML-Tag-Namen und Feldbezeichner als XML-Attribut-Namen dargestellt sein. Entsprechend sind im derartigen Textspeicher die Nachrichtenzeichenketten als XML-Attribut-Werte dargestellt. Die Begriffe XML-Tag-Name, XML-Attribut-Name und XML-Attribut-Wert sind entsprechend als Tag Name, Attribut Name und Attribut Value in der genannten W3C-Recommendation vom 6. Oktober 2000 definiert.

Die Erfindung wird nachfolgend anhand eines Ausführungsbeispiels, eines Quelltext-Listings und einiger Figuren erläutert. Es zeigen:
- Fig. 1: die schematische Darstellung einer Dialogbox mit drei Dialogelementen, worin jeweils als Dialogtext eine Platzhalterzeichenkette enthalten ist,
- Fig. 2: ein Code-Fragment als Beispiel zur Verwendung des in einem Language-Handler-Objekt umgesetzten Verfahrens,
- Fig. 3: einen als XML-Datei ausgeführten Textspeicher mit Einträgen in Form einer XML-Tabelle,
- Fig. 4: den in Fig. 1 gezeigten Dialog nach Durchführung des Ersetzungsverfahrens für diesen Dialog, sowie
- Fig. 5: eine schematische Darstellung eines Computersystems zur Durchführung einer Sprachanpassung der Anzeige eines Computerprogramms.

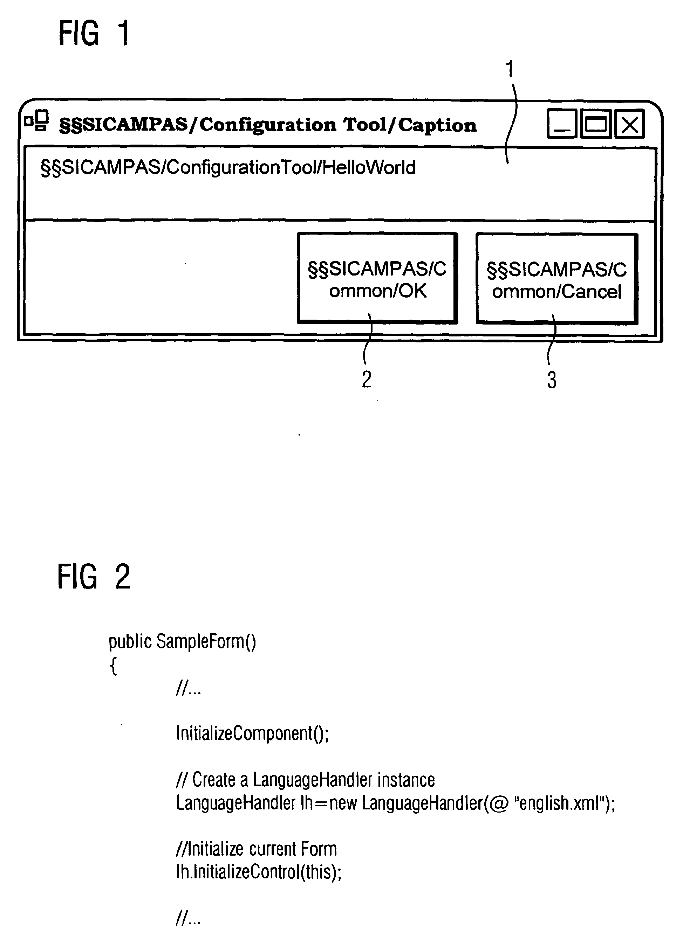

Fig. 1 zeigt eine Dialogbox einer Benutzerschnittstelle eines Computerprogramms mit einem Textfeld 1, einer ersten Schaltfläche 2 und einer zweiten Schaltfläche 3. Diese Dialogbox kann beispielsweise durch die Verwendung üblicher Programmbibliotheken zur Erstellung von grafischen Benutzerschnittstellen (GUI-Libraries) erstellt worden sein, beispielsweise durch Programmierung oder durch die Verwendung eines Entwicklungswerkzeuges für die computergestützte Entwicklung von Benutzerschnittstellen. Der üblicherweise in den gängigen grafischen Elementen enthaltene Text, in dieser Figur der Text, der jeweils in dem Textfeld 1, der ersten Schaltfläche 2 und der zweiten Schaltfläche 3 enthalten ist, wurde wie bei den vorgenannten Entwicklungsverfahren für Benutzerschnittstellen üblich als Zeichenketten-Parameter (beispielsweise "string") zugewiesen.

Diese Zeichenketten sind in diesem Beispiel als Platzhalterzeichenketten ausgestaltet, die mit einem charakteristischen Präfix beginnen, beispielsweise zwei aufeinander folgenden Paragraphenzeichen. Auf diese Weise können Platzhalterzeichenketten leicht von Dialogtexten, welche nicht Platzhalterzeichenketten sind, im folgenden Verfahren unterschieden werden.

Im Übrigen sind die Platzhalterzeichenketten aus als XML-Tag-Namen ausgeführten Namensbezeichnern aufgebaut, vorliegend im Textfeld 1 beispielsweise "SICAMPAS", "ConfigurationTool" und "HelloWorld", in der ersten Schaltfläche 2 beispielsweise "SICAMPAS", "Common" und "OK". Diese sind voneinander durch Schrägstriche getrennt. Auf diese Weise ergibt sich ein Pfad aus XML-Tags bzw. Namensbezeichnern, durch welche im folgenden Verfahren die verschachtelten Namensbezeichner aufgelöst werden können, bzw. der gewünschte Eintrag in einer XML-Tabelle aufgefunden werden kann.

In entsprechender Weise sind die Textzeichenketten der Schaltflächen 2 und 3 aus charakteristischem Präfix, XML-Tags als Namensbezeichnern und separierenden Schrägstrichen zu Platzhalterzeichenketten aufgebaut, die abzüglich des charakteristischen Präfixes einen XML-Pfad ergeben.

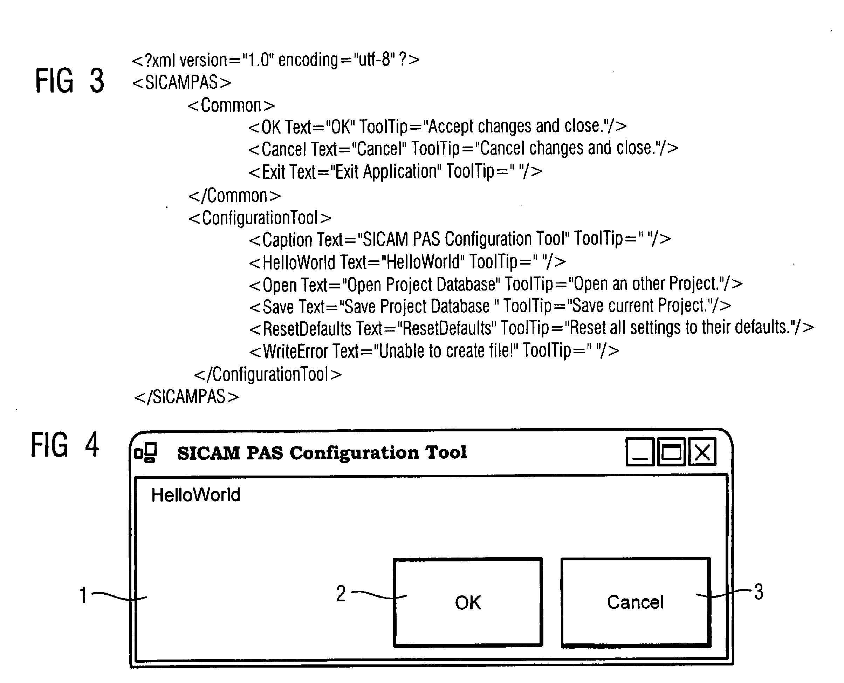

Fig. 2 zeigt ein C-Sharp-Code-Fragment, welches zu einer Dialogbox der Fig. 1 beispielhaft zugehörig sein könnte. Hierin wird eine Instanz eines Language-Handler-Objektes erzeugt und an diese als Parameter der Name einer XML-Datei "english.xml" übergeben. Diese XML-Datei ist ein Textspeicher im Sinne der Erfindung, der im Folgenden in der Fig. 3 beispielhaft in seinem Aufbau beschrieben ist.

Nach der Initialisierung des in Fig. 1 beispielhaft dargestellten Dialogelements durch die Anweisung "InitializeComponent" wird wie oben erwähnt, ein Objekt der Klasse LanguageHandler erzeugt, die ihrerseits die genannte XML-Datei als Textspeicher heranzieht.

Um den eigentlichen Lokalisierungsprozess, also das Ersetzen der in Fig. 1 in den Dialogelementen 1, 2 und 3 dargestellten Platzhalterzeichenketten durch die gewünschten Nachrichtenzeichenketten, zu veranlassen, wird im vorliegenden Codefragment der Fig. 2 die Methode "InitializeControl" des vorgenannten Language-Handler-Objekts aufgerufen. Dieser Funktionsaufruf kann jedoch auch durch beliebige andere fachübliche Programmierungsmethoden erfolgen.

Durch diesen Funktionsaufruf initiiert wird nun während des weiteren Programm-/Verfahrenslaufes jedes Dialogelement 1, 2 und 3 in Fig. 1 nacheinander aufgesucht, überprüft, ob es sich bei der in dem jeweiligen Dialogelement vorhandenen Zeichenkette um eine Platzhalterzeichenkette handelt, indem nach dem charakteristischen Präfix ("§§") gesucht wird, dann das charakteristische Präfix aus der jeweiligen Platzhalterzeichenkette entfernt und anhand des verbleibenden XML-Pfades der durch diesen Pfad adressierte Eintrag der XML-Datei, die schon bei der Erzeugung des Language-Handler-Objekts geöffnet wurde, ausgelesen. Danach wird der zum Eintrag gehörende Wert, nämlich die Nachrichtenzeichenkette, an die Stelle der ursprünglich im jeweiligen Dialogelement enthaltenen Zeichenkette gesetzt, d.h. es wird die im jeweiligen Dialogelement gespeicherte Platzhalterzeichenkette durch die entsprechende ermittelte Nachrichtenzeichenkette ersetzt. In diesem Rahmen können durch einen einzigen Pfad, der als Platzhalterzeichenkette im jeweiligen Dialogelement gespeichert ist, auch mehrere zugehörige Zeichenkettenwerte ersetzt werden, beispielsweise zu den Dialogelementen 1, 2 und 3 gehörende ToolTip-Texte (Erläuterungstexte, die abhängig von einer Mauszeigerposition auf der Anzeigefläche eingeblendet werden) oder Fußleisten-Texte.

Fig. 3 zeigt ein Ausführungsbeispiel für den Aufbau des Textspeichers im XML-Format. In einem Identifizierungsausdruck enthaltene Namensbezeichner sind hier als XML-Tags ausgeführt, die jeweils in spitze Klammern eingeschlossen sind. In Identifizierungsausdrücken des Textspeichers enthaltene Feldbezeichner sind hier als XML-Attribut-Namen ausgeführt, die sich auf der linken Seite eines Gleichheitszeichens befinden. Auf der rechten Seite der Gleichheitszeichen sind, in Anführungszeichen eingeschlossen, die ersetzenden Nachrichtenzeichenketten abgelegt, als XML-Attribut-Werte. In diesem Sinne bilden Attribut-Namen und Attribut-Werte Wertepaare im XML-Textspeicher.

Anhand der ersten Schaltfläche 2 in Fig. 1 wird das Ermitteln der zu im Computerprogramm enthaltenen Platzhalterzeichenketten gehörenden Nachrichtenzeichenketten beschrieben. Wie zuvor geschildert, wird die im Dialogelement ursprünglich gespeicherte Zeichenkette um das charakteristische Präfix bereinigt und der verbleibende Teil als aus XML-Tags bestehender Pfad interpretiert, um den entsprechenden Eintrag im Textspeicher zu lokalisieren. Dabei stellt der besagte Pfad das Schlüsselkriterium dar, anhand dessen die im XML-Textspeicher enthaltenen Zeichen interpretiert werden, so dass der gesuchte Eintrag lokalisiert werden kann. Diese im Textspeicher in der Syntax bzw. dem Format des Textspeichers enthaltenen Zeichen bilden den jeweiligen zum Pfad gehörenden Identifizierungsausdruck, der neben Sonderzeichen auch Tag-Namen und Attribut-Namen enthält. Der Pfad "SICAMPAS/Common/OK" führt somit, als XML-Pfad aufgefasst, zum Auffinden des Identifizierungsausdrucks, der aus den verschachtelten XML-Tags <SICAMPAS>, <Common> und <OK Text= ToolTip= /> aufgebaut ist.

Ist dieser Eintrag auf diese Weise eindeutig lokalisiert, so wird an die Stelle der Platzhalterzeichenkette die dem XML-Attribut-Namen zugewiesene Nachrichtenzeichenkette ("OK") gesetzt. Dieses Ersetzen erfolgt durch Zuweisung an die Speichervariable, unter der vormals die Platzhalterzeichenkette gespeichert war. In entsprechender Weise wird der dem Attribut-Namen "ToolTip" zugewiesene Zeichenketten-Attributwert der entsprechenden Speichervariable der Dialogstruktur zugewiesen. Diese Speichervariable muss dazu nicht vorher mit einem bestimmten Wert gefüllt worden sein. Fig. 4 zeigt beispielhaft das Ergebnis des vollständig ausgeführten Ersetzungsverfahrens der in Fig. 1 dargestellten Dialogelemente mit Platzhalterzeichenketten. Die in Fig. 1 in den Dialogelementen 1, 2 und 3 enthaltenen Platzhalterzeichenketten wurden in der vorbeschriebenen Weise unter Zuhilfenahme des in Fig. 3 dargestellten Textspeichers gegen die darin zugewiesen Nachrichtenzeichenketten ersetzt und bilden nun den textuellen Inhalt der Dialogelemente 1, 2 und 3 in Fig. 4. ToolTip-Texte sind in dieser Figur nicht näher dargestellt.

Auf diese Weise kann durch eine einfache Veränderung des in Fig. 3 dargestellten Inhalts einer XML-Datei der textuelle Inhalte von Dialogelementen der Benutzerschnittstelle eines Computerprogramms angepasst werden, etwa im Rahmen einer Lokalisierung in die Zielsprache eines Landes oder einer Region, ohne dass irgendeine Änderung am Binärcode des ausführbaren Computerprogramm vorgenommen werden muss. Durch die Verwendung von XML-Pfaden wird zudem eine Methode der Adressierung von Einträgen im Textspeicher angegeben, die durch den Menschen leicht verständlich ist und dank derer Einträge durch den Menschen insbesondere bei Verwendung verschachtelter Namensbezeichner leicht aufzufinden sind, ohne dass hierfür das gesamte Dokument zeilenweise durchsucht werden muss.

Dadurch, dass keine weiteren Zuordnungstabellen, wie etwa Tabellen mit Zuordnungen zwischen numerischen IDs und zugeordneten Zeichenketten, oder Platzhalter benötigt werden, wird der Pflegeaufwand verringert und eine bessere Übersichtlichkeit erzielt. Ferner existiert für einen Dialog der Benutzerschnittstelle nur eine einzelne Ressource, so dass eine Synchronisierung der Ressourcen verschiedener Sprachen untereinander entfällt.

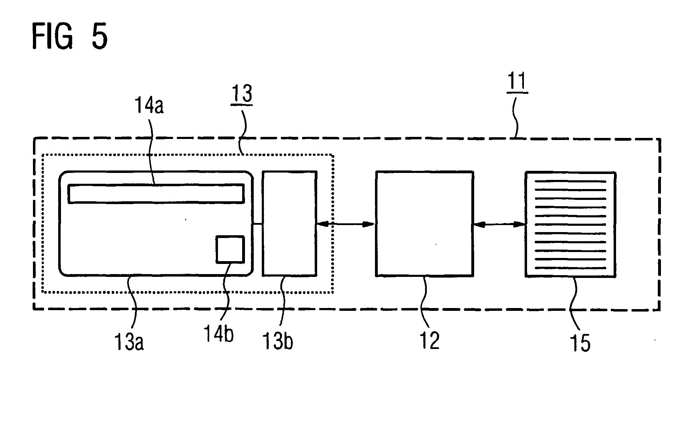

In Figur 5 ist schließlich beispielhaft ein Computersystem 11 in einer Art Blockschaltbild dargestellt. Bei dem Computersystem 11 in diesem Sinne kann es sich um jedes elektrische Gerät handeln, dessen Funktionen zumindest teilweise von einem Mikroprozessor 12 gesteuert ablaufen, beispielsweise also um Personalcomputer, Mobiltelefone, Geräte der Unterhaltungselektronik oder auch Automatisierungsgeräte in automatisierten Prozessen, z. B. Schutz- und Leitgeräte in Energieversorgungs- und -verteilungssystemen. Ein solches Gerät besitzt üblicherweise eine Anzeigevorrichtung 13, z. B. einen Monitor oder ein Display. Die Anzeigevorrichtung 13 weist ein Anzeigefeld 13a, etwa die Bildschirmoberfläche eines Monitors, und eine Anzeigesteuerung 13b, z.B. mit Steuerungsprogrammen wie Treibern zum Erzeugen einer Anzeige auf dem Anzeigefeld 13a und Anzeigespeichern zum Zwischenspeichern von Elementen der Anzeige auf. Auf dem Anzeigefeld werden beispielhaft Anzeigeobjekte 14a und 14b dargestellt, die Texte (in der Figur 5 nicht gezeigt) in einer zunächst angezeigten Ausgangssprache aufweisen.

Zum Verändern der angezeigten Sprache von der Ausgangssprache in eine bevorzugte Auswahlsprache werden während des Betriebes des Computersystems über einen Befehl eines vom Mikroprozessor 12 abgearbeiteten Computerprogramms mikroprozessorgesteuert den Anzeigeobjekten 14a und 14b zugeordnete Speicherbereiche des Computersystems - z. B. die Anzeigespeicher der Anzeigessteuerung 13b - auf Platzhalterzeichenketten, z.B. aus XML-Tags bestehende Pfade, untersucht. Diese werden durch den Mikroprozessor 12 gesteuert entsprechend der weiter oben erläuterten Vorgehensweise in Identifizierungsausdrücke ersetzt und an einen Textspeicherbaustein 15 übergeben. Dieser Textspeicherbaustein 15 weist in einem Textspeicher, z. B. einer XML-Tabelle, diesen Identifizierungsausdrücken zugeordnete Nachrichtenzeichenketten in der Auswahlsprache auf. Auf Anforderung durch den Mikroprozessor 12 werden zu entsprechenden Identifizierungsausdrücken gehörende Nachrichtenzeichenketten ermittelt und an den Mikroprozessor 12 sowie daraufhin an den Anzeigespeicher der Anzeigesteuerung 13b übergeben. Schließlich werden die Nachrichtenzeichenketten in der (neu ausgewählten) Auswahlsprache an den durch die Platzhalterzeichenketten vorgegebenen Stellen in die Anzeigeobjekte anstelle der bisherigen Zeichenketten in der Ausgangssprache eingefügt. Die Anzeige der Anzeigeobjekte 14a und 14b erfolgt daraufhin in der bevorzugten Auswahlsprache.

Zusammengefasst stellt also das Computersystem 11 nach Figur 5 im allgemeinen Sinne ein elektrisches Gerät mit zumindest einem Mikroprozessor 12 und einer Anzeigevorrichtung 13 dar, auf der mindestens ein Anzeigeobjekt 14a, 14b in einer Ausgangssprache dargestellt ist. Es ist ein anwählbarer Textspeicherbaustein 15 vorhanden, der alphanumerischen Identifizierungsausdrücken zugewiesene alphanumerische Nachrichtenzeichenketten der Auswahlsprache enthält. Zum Wechsel von der Ausgangssprache in die fortan anzuzeigende Auswahlsprache gibt dieser auf Anforderung von dem Mikroprozessor 12 zu ausgewählten Identifizierungsausdrücken gehörende Nachrichtenzeichenketten in der Auswahlsprache ab, wenn er mit einem Identifizierungsausdruck beaufschlagt ist, der einer dem mindestens einen Anzeigeobjekt 14a, 14b zugeordneten Platzhalterzeichenkette entspricht.

Im praktischen Betrieb kann die Neukonfiguration eines Programms bzw. eines Computersystems auf eine andere als die gegenwärtig benutzte Sprache durch einfaches Ersetzen einer den Textspeicher enthaltenden Datei, etwa durch einfaches Umkopieren dieser Datei, erreicht werden. Anhand des in Fig. 2 dargestellten Codefragments ließe sich dies beispielsweise durch Ersetzen der Datei english.xml durch eine veränderte oder völlig andere Datei mit dem Namen english.xml erreichen. Auf diese Weise können z. B. Rechtschreib- und Grammatikfehler der ursprünglichen XML-Datei auch beim Kunden vor Ort beseitigt werden, da keine Neugenerierung von Software notwendig ist. Im folgenden Listing wird eine detaillierte Beschreibung einer verfahrensgemäßen Implementierung in einem Computersystem in der Sprache C-Sharp angegeben:
using System;
using System.Xml;
using System.Xml.XPath;
using System.Windows.Forms;
using System.IO;

```
 namespace Siemens.PTD.Sicam.PAS.LanguageHandler
 {
 /// <summary>
 /// This class contains all required operations for the language handling
 /// </summary>
 public class LanguageHandler
 {
  #region Protected Members

     protected XmlDocument m_Doc;

  #endregion

  #region Construction / Dispose

  /// <summary>
  /// Constructs a ResourceManager object.
  /// </summary>
  /// <param name="languageFilePath">Path to language table</param>
  public LanguageHandler(string languageFilePath)
  {
     m_Doc = new XmlDocument();
     m_Doc.Load(languageFilePath);
  }

  #endregion

  #region Public Methods

  /// <summary>
  /// Initializes the language of a Control and its context menu.
  /// </summary>
  /// <param name="ctrl">Control to be initialized</param>
  public void InitializeControl (Control ctrl)
  {
     if (ctrl == null)
         return;

     HandleControlLanguage(ctrl);
     InitializeControl(ctrl.ContextMenu);
  }

  /// <summary>
  /// Initializes the language of a Menu and all its items.
  /// </summary>
  /// <param name="ctrl">Menu to be initialized</param>
  public void InitializeControl(Menu mnu)
  {
     if (mnu == null)
         return;

     foreach (MenuItem item in mnu.MenuItems)
     {
         HandleMenuLanguage(item);
      }

     /// <summary>
     /// Initializes the language of a Form and its menu.
     /// </summary>
     /// <param name="ctrl">Menu to be initialized</param>
     public void InitializeControl(Form ctrl)
     {
         if (ctrl == null)
            return;

        InitializeControl ( (Control) ctrl);
        InitializeControl (ctrl.Menu) ;
     }

     /// <summary>
     /// Gets a single Text from the language table
     /// </summary>
     /// <param name="textPath"></param>
     /// <returns></returns>
    public string GetText(string textPath)
     {
        XmlNode node;

       node = m_Doc.SelectSingleNode(textPath);

        if (node == null)
           return textPath;

        return node.InnerText;
    }

    #endregion

    #region protected Methods

    /// <summary>
    /// Loads the Text of the Control and its subcontrols from the language

    /// table and changes them.
    /// </summary>
    /// <param name="ctrl">Control to be changed</param>
    protected void HandleControlLanguage(Control ctrl)
    {
       if (ctrl == null)
           return;

       XmlNode node;

       try
       {
           if (ctrl.Text.StartsWith("§§"))
           {
              node = m_Doc.SelectSingleNode(ctrl.Text.Remove(0, 2));
              ctrl.Text = node.InnerText;
           }
       }
       catch { }

       InitializeControl (ctrl.ContextMenu) ;
       foreach (Control c in ctrl.Controls)
 {
          HandleControlLanguage(c);
       }
   }

   /// <summary>
   /// Loads the Text of the menu from the language table and changes them.
   /// </summary>
   /// <param name="ctrl">Control to be changed</param>
   protected void HandleMenuLanguage(MenuItem mnuItem)
   {
      if (mnuItem == null)
          return;

      XmlNode node;

      try
      {
         if (mnuItem.Text.StartsWith("§§"))
          {
             node = m_Doc.SelectSingleNode(mnuItem.Text.Remove(0, 2));
             mnuItem.Text = node.InnerText;
         }
      }
      catch { }
      foreach (MenuItem mi in mnuItem.MenuItems)
      {
         HandleMenuLanguage(mi);
  }
  #endregion
 }
 }
```

## Patentansprüche

1. Verfahren zur Sprachkonfigurierung eines Computerprogramms, umfassend die Schritte:
- Auswählen eines Textspeichers (15), in welchem alphanumerischen Identifizierungsausdrücken alphanumerische Nachrichtenzeichenketten zugewiesen sind;
- Auffinden von zu im Computerprogramm enthaltenen Platzhalterzeichenketten gehörenden Identifizierungsausdrücken im Textspeicher (15) und Ersetzen der Platzhalterzeichenketten des Computerprogrammes mit den im Textspeicher (15) zugewiesenen Nachrichtenzeichenketten, wobei
- besagtes Auffinden und Ersetzen zur Laufzeit des ausführbaren binären Computerprogrammes durchgeführt wird;
**dadurch gekennzeichnet, dass**
- eine Platzhalterzeichenkette durch ein charakteristisches Präfix gefolgt von Namensbezeichnern gebildet wird,
- zu ersetzenden Platzhalterzeichenketten jeweils aus einer Speichervariable einer Dialogstruktur des Computerprogramms ausgelesen werden,
- der Textspeicher (15) so ausgewählt wird, dass die Identifizierungsausdrücke alphanumerische Namensbezeichner und alphanumerische Feldbezeichner enthalten und je einem Feldbezeichner eine Nachrichtenzeichenkette zugewiesen ist,
- das Auffinden eines Identifizierungsausdrucks im Textspeicher (15) zu einer im Computerprogramm enthaltenen Platzhalterzeichenkette durch Auswertung eines aus mindestens einem der besagten Namensbezeichner gebildeten Pfades der Platzhalterzeichenkette erfolgt, indem nach Entfernen des charakteristischen Präfixes aus der Platzhalterzeichenkette anhand des verbleibenden Pfades der durch diesen Pfad adressierte Eintrag in dem Textspeicher (15) ausgelesen wird, und
- besagtes Ersetzen durch Zuweisung der Nachrichtenzeichenketten an diejenigen Speichervariablen des laufenden Computerprogrammes erfolgt, unter der vormals die jeweilige Platzhalterzeichenkette gespeichert war.

2. Verfahren nach Anspruch 1,
**dadurch gekennzeichnet, dass**
- für den Aufbau des Textspeichers (15) das XML-Format ausgewählt wird und das Auffinden der Identifizierungsausdrücke durch Interpretieren von XML-Tags erfolgt.

3. Verfahren nach Anspruch 2,
**dadurch gekennzeichnet, dass**
- Identifizierungsausdrücke und Nachrichtentexte im XML-Textspeicher (15) in Form einer XML-Tabelle gespeichert sind.

4. Computersystem (11) zur Sprachkonfigurierung eines im Computersystem (11) gespeicherten Computerprogramms, das zur Laufzeit des Computerprogramms zur Durchführung eines Verfahrens gemäß einem der Ansprüche 1 bis 3 geeignet ist.

## Claims

1. Method for configuring the language of a computer program, comprising the following steps:
- a text store (15) in which alphanumeric identification expressions have associated alphanumeric message character strings is selected;
- identification expressions associated with wildcard character strings contained in the computer program are found in the text store (15), and the wildcard character strings in the computer program are replaced with the associated message character strings in the text store (15),
- said finding and replacing being performed at the runtime of the executable binary computer program;
**characterized in that**
- a wildcard character string is formed by a characteristic prefix followed by name descriptors,
- wildcard character strings to be replaced are respectively read from a storage variable in a dialogue structure in the computer program,
- the text store (15) is selected such that the identification expressions contain alphanumeric name descriptors and alphanumeric field descriptors, and a respective field descriptor has an associated message character string,
- an identification expression in the text store (15) is found for a wildcard character string contained in the computer program by evaluating a path for the wildcard character string, which path is formed from at least one of said name descriptors, by virtue of the remaining path after removal of the characteristic prefix from the wildcard character string being used to read the entry addressed by this path in the text store (15), and
- said replacing is performed by attributing the message character strings to those storage variables in the running computer program under which the respective wildcard character string was formerly stored.

2. Method according to Claim 1,
**characterized in that**
- the XML format is selected for the design of the text store (15), and the identification expressions are found by interpreting XML tags.

3. Method according to Claim 2,
**characterized in that**
- identification expressions and message texts are stored in the XML text store (15) in the form of an XML table.

4. Computer system (11) for configuring the language of a computer program stored in the computer system (11), which is suitable for carrying out a method according to one of Claims 1 to 3 at runtime of the computer program.

## Revendications

1. Procédé de configuration vocale d'un programme informatique, comprenant les étapes :
- sélection d'une mémoire de texte (15) dans laquelle des chaînes de caractères de message alphanumériques sont attribuées à des expressions d'identification alphanumériques ;
- recherche dans la mémoire de texte (15) d'expressions d'identification appartenant à des chaînes de caractères joker contenues dans le programme informatique et remplacement des chaînes de caractères joker du programme informatique par les chaînes de caractères de message attribuées dans la mémoire de texte (15),
- ladite recherche et ledit remplacement étant effectués au cours de l'exécution du programme informatique binaire exécutable ;
**caractérisé par le fait que**
- une chaîne de caractères joker est formée par un préfixe caractéristique suivi d'indicateurs de nom,
- des chaînes de caractères joker à remplacer sont lues à chaque fois dans une variable de mémoire d'une structure de dialogue du programme informatique,
- la mémoire de texte (15) est sélectionnée de telle sorte que les expressions d'identification contiennent des indicateurs de nom alphanumériques et des indicateurs de champ alphanumériques et que, à chaque fois, une chaîne de caractères de message est attribuée à un indicateur de champ,
- la recherche d'une expression d'identification dans la mémoire de texte (15) pour une chaîne de caractères joker contenue dans le programme informatique est effectuée en évaluant un chemin, formé à partir d'au moins l'un des indicateurs de nom mentionnés, de la chaîne de caractères joker et, après la suppression du préfixe caractéristique de la chaîne de caractères joker, en lisant à l'aide du chemin restant l'enregistrement adressé par ce chemin dans la mémoire de texte (15), et
- ledit remplacement est effectué par attribution des chaînes de caractères de messages à celle des variables en mémoire du programme informatique en cours sous laquelle la chaîne de caractères joker respective était mémorisée auparavant.

2. Procédé selon la revendication 1, **caractérisé par le fait que**, pour la structure de la mémoire de texte (15), le format XML est sélectionné et la recherche des expressions d'identification s'effectue par interprétation d'étiquettes XML.

3. Procédé selon la revendication 2, **caractérisé par le fait que** des expressions d'identification et des textes de message sont mémorisés dans la mémoire de texte XML (15) sous la forme d'un tableau XML.

4. Système informatique (11) pour la configuration vocale d'un programme informatique mémorisé dans le système informatique (11), lequel convient à la mise en oeuvre d'un procédé selon l'une des revendications 1 à 3 au cours de l'exécution du programme informatique.
